Europäisches Patentamt

(19) European Patent Office

Office européen des brevets

(11) Publication number: **0 079 874**
**A1**

## (12) EUROPEAN PATENT APPLICATION

(21) Application number: 82850216.1

(22) Date of filing: 01.11.82

(51) Int. Cl.³: **F 16 G 11/04**
**A 43 C 7/00**

(30) Priority: 12.11.81 SE 8106726

(43) Date of publication of application:
25.05.83 Bulletin 83/21

(84) Designated Contracting States:
AT BE DE FR GB IT NL

(71) Applicant: Bengtsson, Sigurd Walter
Bruksgatan 17
S-414 51 Göteborg(SE)

(72) Inventor: Bengtsson, Sigurd Walter
Bruksgatan 17
S-414 51 Göteborg(SE)

(74) Representative: MacFie, W.R. et al,
Backers Patentbyra AB Drottninggatan 15
S-41114 Göteborg(SE)

(54) A cord lock.

(57) The lock (10) is formed into a unitary body, and is adapted to receive cords, laces, or the like (11) of elastically deformable material, so the cross section may be reduced by stretching the cord, or the like. The lock body (13) has a passage (14) for the reception of at least one cord part. The passage has a cross section substantially equal to that of the cord, and is dimensioned, so its maximum transverse measure is less than the nominal cross section of the cord part, or parts, at the location of contact, but bigger than the minimum, transverse measure of the cort part, or parts, in stretched condition.

The ends of the cord may be introduced into special holes (22) in the body, having diverging mouth portions. The lock is preferably symmetric in its longitudinal and transverse directions, and is provided with at least one support portion (19) preventing the body from tilting, when the cord is tightened.

FIG. 13

EP 0 079 874 A1

P 6859/McF/Ah

A CORD LOCK

The present invention refers to a cord lock, which for instance may be used for tying shoe laces, for locking the cords closing rucksaks, valises, bags, sacks or other types of parcels, as well as for holding strings used in pieces of clothing.

The problem is to present a design which is simple to produce and to use, is reliable in use, and can be supplied at a reasonable price.

Previously known cord locks have mostly included two members, which are adjustable in relation to each other in order to secure one or more cord parts by friction. One design is i.a. shown in British patent 1229472. There are further a number of designs where the cord lock is manufactured as a unitary piece, which, in one way or the other, is resiliently deformable to permit the introduction and the retaining of a cord or the like. Examples of such designs are shown in US 2 650 399,  2 813 323,  2 877 526, 2 845 673,  3 066 370,  3 070 863,  3 296 669 and 3 358 338 as well as in DE 939 013 and DE AS 1 934 917.

The drawbacks of these designs – the multiple component type as well as the unitary pice type – are noticed by the manufacturer as well as by the user. Known locks can furthermore not be used with elastic cords, where the diameter will be reduced when the cord is stretched. The endurance of the unitary type lock is further questionable due to fatigue strength of the elastic component becoming reduced.

The aim of the invention is to set aside the drawbacks mentioned, and to propose a new type of cord lock for holding at least two cord parts and comprising a body having at least one passage for said cord parts. The cord lock is characterized by the body being adapted for cooperation with cords which, at least in the portion thereof expected to pass through the body, are  made of elastically deformable material,the passage at least along part of its extension having a transverse measure which is smaller than the nominal transverse measure of the portion(s) of the cord located within the passage, in un-stretched condition.

The body is preferably provided with means for receiving the free ends of the cord, as they leave the passage.

The passage may be formed as a single pass in the body.

In a modified embodiment the passage may provide separate passes for the two cord parts.

The means for receiving the cord ends in one embodiment comprises at least one resilient tongue, below which the cord ends are clipped.

In a modified embodiment the body is provided with separate holes for each end of the cord.

According to a development of the invention the body is provided with a support portion forming an extension of the passage, and adapted to prevent a tilting of the body when the cord is tightened.

An embodiment which is preferable for the user as well as with respect to its function, shows substantially like cross sections for the passage or passages, as well as for the cord part or parts. The cross sections are preferably circular.

In the embodiment where the body is provided with separate holes for the cord ends, the holes preferably run substantially parallel to a centrally located passage adapted to accomodate two cord parts, the holes having mouth portions diverging outwardly.

In one embodiment, where passage(s) has (have) a circular cross section the diameter at the location of contact is less than twice the nominal diameter of the cord in un-stretched condition, but bigger than the diameter of said part, or parts in stretched condition at said location.

Some embodiments of the invention will below be described with reference to the accompanying drawings, in which

Figure 1 shows a first embodiment of the invention, as used for tying a shoe lace, only the uppermost pair of eyelets being shown,

Figure 2 shows, on a larger scale, the cord lock of Figure 1 as viewed from above,

Figure 3 shows a section along line III - III in Figure 2,

Figure 4 shows a side view of the lock,

Figure 5 shows a second embodiment of the invention adjacent to the uppermost pair of eyelets,

Figure 6 shows, on an enlarged scale, an end view of the lock according to Figure 5,

Figure 7 shows a section along line VII - VII in Figure 5,

Figure 8 shows a further modification of the lock according to Figure 5,

Figure 9 shows a section along line IX - IX in Figure 8,

Figure 10 shows a still further modified embodiment of the lock according to Figure 5,

Figure 11 shows a section along line XI - XI in Figure 10,

Figure 12 shows still an other embodiment of a cord lock, together with the uppermost pair of eyelets,

Figure 13 shows, on a larger scale, the lock according to Figure 12, as viewed from above,

Figure 14 shows a section along line XIV - XIV in Figure 13,

Figure 15 shows an end view of the lock according to Figure 12,

Figure 16 shows a plan view, partly in section, of still a further embodiment according to the invention,

Figure 17 shows an end view of the lock according to Figure 16, and

Figure 18 shows a side view of the same.

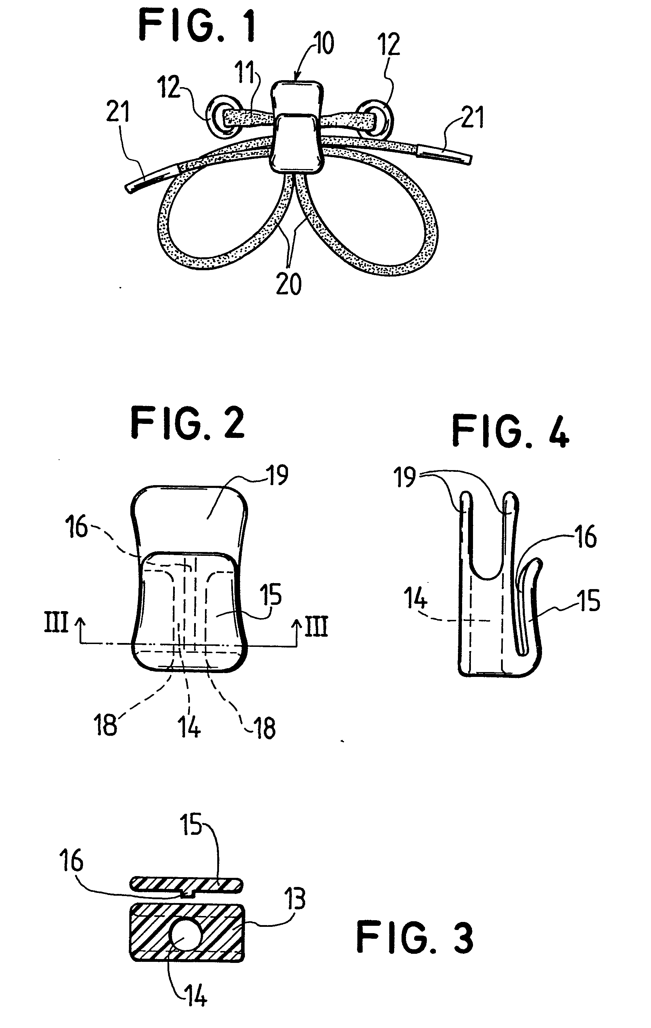

The cord lock 10 of Figure 1 is mounted upon a shoe lace 11, which is shown together with the uppermost pair of eyelets 12 in a shoe. The lock 10 comprises a body 13, for instance of thermoplastic or thermosetting resin, or of some other, suitable material. The body 13 is provided with a through-passage 14, preferably having a cross section similar to that of the shoe lace 11. In the embodiment shown the cross section is circular. In order to facilitate the introduction of the ends of the lace, the mouth portions 18 of the passage are tapered. A resilient tongue 15 is formed integral with the body 13, the tongue preferably having at least one locking rib 16. The body 13 is further provided with and extended portion 19, serving as a support, and preventing the body from tilting when the lace is tightened.

In contradistinction to known locks, the lock according to the present invention is adapted for use with elastic cords 11 – which are unsuitable for locks according to the known art. The cord 11 and the passage 14 both have basically the same cross sectional configuration, the passage 14, however, showing a transverse measure less than twice the corresponding nominal measure of the part, or parts 20, at the location of contact in the passage, but bigger than the minimum measure of the part, or parts, in stretched condition.

When the lock 10 is to be mounted, the parts of the lace 20, one after the other, are inserted into the passage 14 in the body 13. First the tab 21 of one part 20 is introduced, whereupon the lace is stretched so its diameter is reduced, to permit the passing of the tab of the other lace part 20.

When the lace is to be tied both parts 20 of the lace are gripped with one of the hands, while the body 10 is being pushed towards the shoe by the other hand. Alternatively one part 20 of the lace may be gripped by each hand, whereupon the parts are pulled in opposite directions. The lock will then slide inwards, towards the shoe. When the lace is to be un-tied one hand grips the body and pulls it away from the shoe.

The fact that both parts of the lace will slide through the passage in the body with small friction is due to the noticeable reduction of the diameter during the stretching. As soon as the stretching force is relieved the diameter of the lace parts will return to its nominal size, whereafter the parts cannot be pulled through the passage, but offer a noticeable resistance. The lace will thus be retained in the body due to the friction caused by the compaction of the lace parts within the passage and due to the increased diameter (bulge) formed where the free ends of the parts leave the lock. By a suitable selection of lace and lock this friction will be adequate to hold the lace parts secure, also during a hard tightening.

The tongue 15 and the locking ledge 16 will serve to collect the ends of the lace parts 20, and to hold them in place.

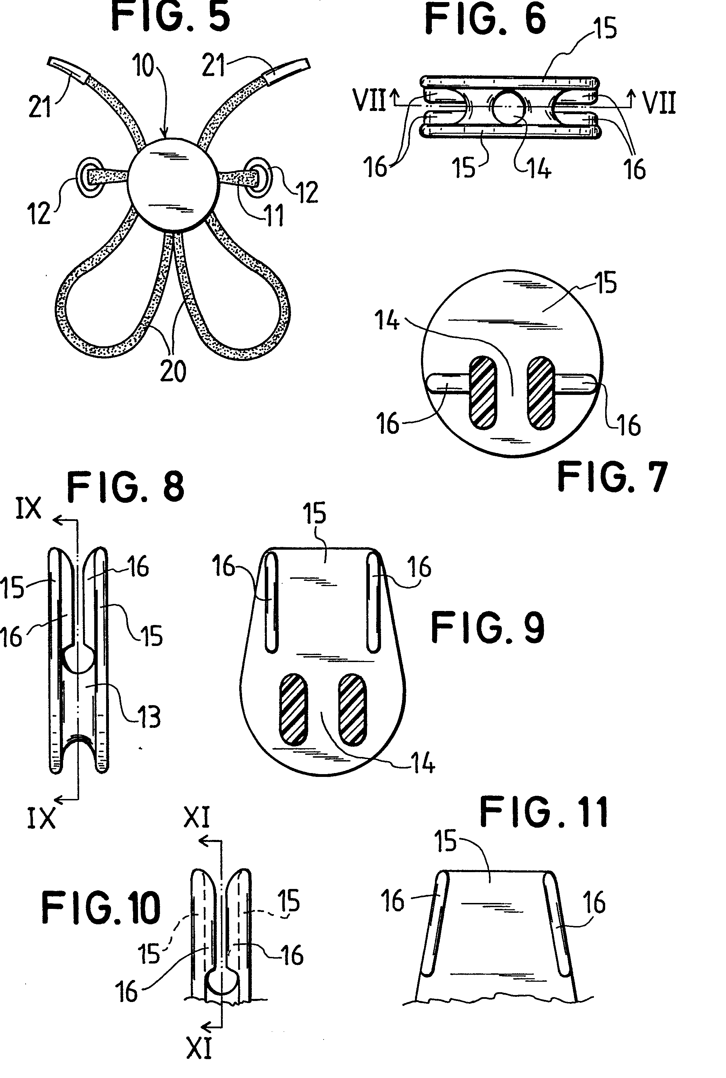

Figures 5 - 11 show some modified embodiments of securing the ends of the lace parts 20 by means of locking-ledge reinforced tongues.

With the embodiment according to Figures 5 - 7 the body has a basically cylindrical shape, and comprises two parallel plates, which are held together by two parallel bars of material, which between themselves define the passage 14.

The passage is located within one half of the circular plane section, which makes it possible for the opposite half of the section to function as a tilting preventing support. The marginal portions of the two plates will form resilient tongues 15 for gripping the two lace ends.

A locking ledge 16 is provided at the inward face of each plate, extending sidewardly from each of the bars defining the passage 14. The ends of the lace will here be gripped substantially in parallel to the passage 14.

The embodiment according to Figures 8 - 11 largely corresponds to that of Figures 5 - 7, but here the portions 15 of the plates are extended beyond passage 14. Two mutually parallel ledges 16 are provided at the inward face of each plate, in parallel to the longitudinal direction of the passage 14, but displaced outwardly therefrom. Here the cord ends will be gripped substantially transversely with respect to the passage.

Figure 11 shows a modification of the embodiment according to Figure 9. The locking ledges 16 are here located along the side edges of the projecting tongues 15, which will ensure a safe gripping of the lace ends.

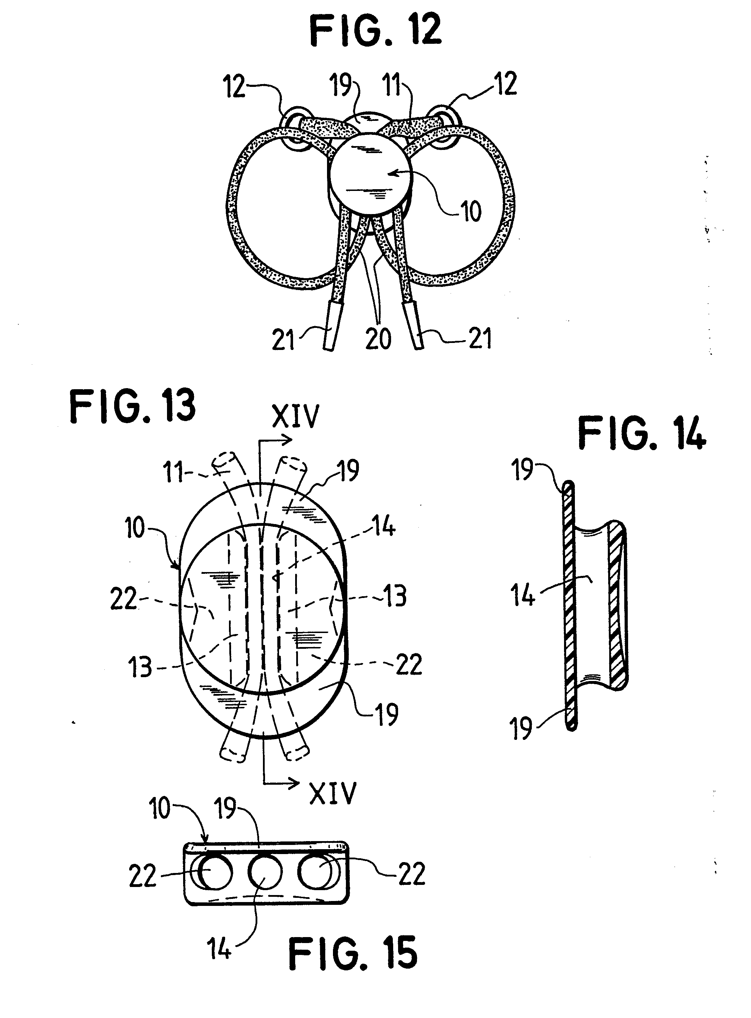

Figures 12 - 15 show how the ends of the lace 20 are fitted into holes 22 having outwardly diverging mouth portions. The lock is in this embodiment symmetrical with respect to a longitudinal axis, as well as to a transverse axis, and may thus be turned in either direction, when fitted upon a cord, while retaining the function of any of the support portions 19, which will prevent a tilting of the body when the cord is tightened.

Further modifications and variations are of course possible. Separate passes for the parts of the cord may thus be provided, instead of using a common passage. The intention is that such variations shall also be covered by the appended claims.

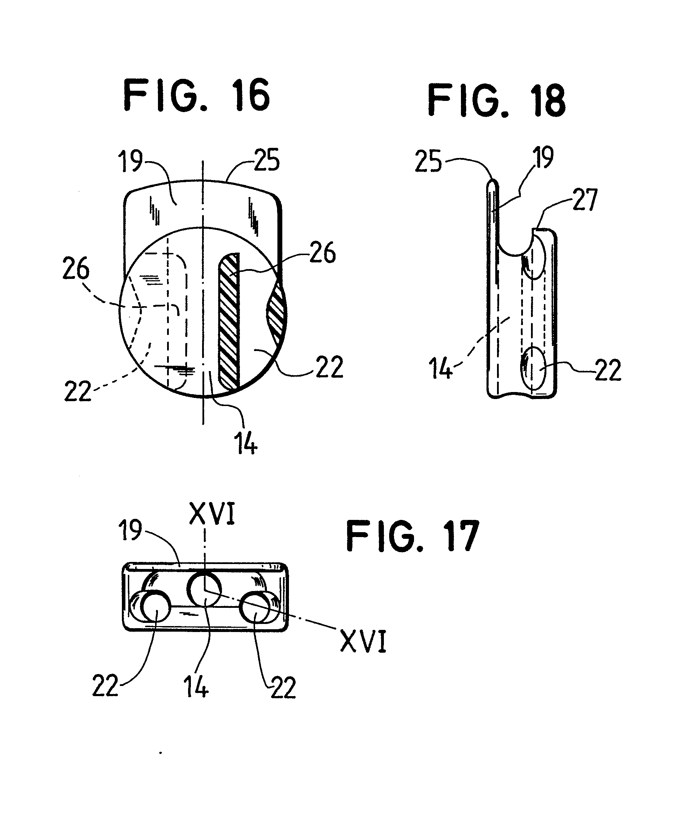

The cord lock shown in Figures 16 - 18 is largely the same as that shown in Figure 13, i.e. it includes a circular body enclosing a central passage 14 for two cord parts, as well as two sideward passages 22 having outwardly diverging mouth portions for the ends of the cord parts.

There is also an extended support portion 19, which here has an outwardly slightly curved contact surface 25, having substantially the same breadth as the body. The bars 26 of material sidewardly defining the passage 14 do not extend fully to the periphery of the circular body, whereby the top portion thereof will extend beyond the mouth of the passage 14, to form a nose 27. This will aid in holding the entering parts of the cord in their proper place.

The central passage 14 is located close by the plane including the extended supporting portion 19, while the passes 22 are located further away from this plane. This will, together with the action of the nose 27 provide an increased pressure between entering cord parts and the ends thereof introduced into the passes 22.

Claims

1. A cord lock for holding at least two cord parts (20) and comprising a body (11) having at least one passage (14) for said cord parts, c h a r a c t e r i z e d in that the body (11) is adapted for cooperation with cords which, at least in the portion thereof expected to pass through the body, are made of elastically deformable material, the passage (14) at least along part of its extension having a transverse measure which is smaller than the nominal transverse measure of the portion(s) of the cord located within the passage, in un-stretched condition.

2. A cord lock according to claim 1, c h a r a c - t e r i z e d in that the passage is formed as a single through-hole (14) in the body.

3. A cord lock according to claim 1, c h a r a c - t e r i z e d in that the passage provides separate passes for each cord part.

4. A cord lock according to any of the preceeding claims, c h a r a c t e r i z e d in that the body (11) is provided with means (15, 16; 22) adapted to receive the free ends of the cord parts.

5. A cord lock according to claim 4, c h a r a c - t e r i z e d in that the means for receiving the cord end comprises at least one resilient tongue (15), below which the cord ends may be gripped.

6. A cord lock according to claim 4, c h a r a c - t e r i z e d in that the means for receiving the cord ends comprises separate holes (22) for each cord end.

7. A cord lock according to any of the preceeding claims, c h a r a c t e r i z e d in that the body is provided with a support portion (19) in the axial direction of the passage, and adapted to prevent a tilting of the body, when the cord is tightened.

8. A cord lock according to any of the preceeding claims, c h a r a c t e r i z e d in that the passage, or passages, as well as the cord part or parts show substantially like cross sections, preferably being circular.

9.   A cord lock according to any of claims 6 - 8, c h a r a c t e r i z e d  in that the separate holes (22) for the cord ends run substantially parallel to a central passage (14), the mouths of said holes diverging outwardly from the passage.

10.   A cord lock according to either of claims 8 or 9, c h a r a c t e r i z e d  in that the circular cross section of the passage at the location of contact has a diameter which is smaller than twice the nominal diameter of the cord in un-stretched condition, but bigger than the minimum diameters of the cord parts in stretched condition.

11.   A cord lock according to either of claims 7 - 10, where the body has a circular shape, c h a r a c t e r i z e d  in that the bars (26) in the body defining the passage (14) do not extend fully to the periphery of the body at the end of the passage (14) turned towards the support portion (19), whereby the roof part of the body will form a nose (27) covering the adjacent mouth of the passage.

12.   A cord lock according to claim 11, c h a r a c t e r i z e d  in that the central passage (14) and the sideward holes (22) are located at different levels in relation to a plane enclosing the support portion (19), the sideward holes being most remote from said plane.

1/4

0079874

FIG. 1

FIG. 2

FIG. 4

FIG. 3

2/4

0079874

FIG. 5

FIG. 6

FIG. 7

FIG. 8

FIG. 9

FIG. 10

FIG. 11

**FIG. 12**

**FIG. 13**

**FIG. 14**

**FIG. 15**

# FIG. 16

# FIG. 18

# FIG. 17

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | F 16 G   11/04 |
| Y | US-A-4 290 173  (HERLAU) *Column  2,  lines 23-39; figures 4-5* | 1-5 | A 43 C    7/00 |
| | --- | | |
| Y | CH-A-  316 052  (FISCHER) *The whole document* | 1-5 | |
| | --- | | |
| A | DE-A-1 486 415  (JASPES) | | |
| | --- | | |
| D,A | US-A-3 066 370  (EPSTEIN) *Column  3,  lines  9-15; figures 2-4* | 6,8 | |
| | ----- | | |

| TECHNICAL FIELDS SEARCHED (Int. Cl. ³) |
|---|
| F 16 G A 43 C B 65 D |

The present search report has been drawn up for all claims

| Place of search THE HAGUE | Date of completion of the search 20-01-1983 | Examiner NADELHOFFER J. |
|---|---|---|